# EUROPÄISCHE PATENTSCHRIFT

(11) **EP 3 505 040 B1**
(45) Veröffentlichungstag und Bekanntmachung des Hinweises auf die Patenterteilung: **04.05.2022**
(21) Anmeldenummer: 18212862.9
(22) Anmeldetag: 17.12.2018
(51) Int. Cl.: A47L 15/42, A47L 15/48

(54) **GESCHIRRSPÜLMASCHINE, INSBESONDERE HAUSHALTSGESCHIRRSPÜLMASCHINE**
DISHWASHER, SPECIFICALLY DOMESTIC DISHWASHER
LAVE-VAISSELLE, EN PARTICULIER LAVE-VAISSELLE ÉLECTROMÉNAGER

(30) Priorität: 02.01.2018 DE 102018100010; 02.01.2018 DE 102018100013; 02.01.2018 DE 102018100014
(43) Veröffentlichungstag der Anmeldung: 03.07.2019
(60) Teilanmeldung: 22163456.1
(73) Patentinhaber: Miele & Cie. KG, 33332 Gütersloh (DE)
(72) Erfinder: Tegeler, Daniel, 33649 Bielefeld (DE); Dahms, Tobias, 30519 Hannover (DE); Schröder, Nils, 33611 Bielefeld (DE); Dettmer, Martin, 33607 Bielefeld (DE)

(56) Entgegenhaltungen:
- EP-A1- 2 390 404
- EP-A1- 2 549 008
- EP-A2- 2 322 072
- WO-A1-2005/053504
- WO-A1-2015/185086
- CN-A- 106 580 218
- DE-A1-102009 049 066
- KR-A- 20070 046 740
- KR-B1- 101 657 711

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und einer Wärmepumpeneinrichtung, die einen Verdichter mit einem Kältemitteleingang und einem Kältemittelausgang aufweist.

Geschirrspülmaschinen der eingangs genannten Art sind aus dem Stand der Technik an sich wohl bekannt, weshalb es eines gesonderten druckschriftlichen Nachweises an dieser Stelle nicht bedarf.

Vorbekannte Geschirrspülmaschinen verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter zur Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sog. Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe abgepumpt und verworfen. Geschirrspülmaschinen der eingangs genannten Art können bekanntermaßen mit einer Wärmepumpeneinrichtung ausgestattet sein, um den Energieverbrauch insbesondere bei einem Aufheizen der Spülflotte zu reduzieren, insbesondere deshalb, weil ein solches Aufheizen der Spülflotte den größten Anteil am Energieverbrauch einer Geschirrspülmaschine ausmacht.

Aus der EP 2 682 038 A2 ist eine Geschirrspülmaschine mit einer Luft-Wasser-Wärmepumpeneinrichtung bekannt. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpeneinrichtung verfügt zu diesem Zweck in an sich bekannter Weise über einen Verdampfer, einen Verdichter, einen Verflüssiger und einen diese Komponenten miteinander strömungstechnisch verbindenden Strömungs- oder Umwälzkreislauf. Dabei dient der Verflüssiger als Wärmetauscher, mittels dem Wärmeenergie von einem im Strömungskreislauf der Wärmepumpeneinrichtung umgewälzten Kältemittel auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Kältemittel übertragen wird, das infolge dessen im Verdampfer verdampft.

Das daraufhin in gasförmiger Form vorliegende Kältemittel wird anschließend in dem Verdichter komprimiert und so auf ein höheres Temperaturniveau gebracht. Der Verdichter verfügt zu diesem Zweck über einen Kältemitteleingang und einen Kältemittelausgang, wobei das noch nicht komprimierte Kältemittel dem Verdichter über den Kältemitteleingang zugeführt wird, wohingegen das im Verdichter komprimierte Kältemittel den Verdichter über den Kältemittelausgang verlässt. Schließlich erfolgt eine Einleitung des gasförmigen und komprimierten Kältemittels in den Verflüssiger, wo unter Energiefreigabe eine Verflüssigung des Kältemittels stattfindet. Die dabei frei werdende Wärmeenergie dient der Spülflottenaufheizung.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpeneinrichtung beherbergt. Im Betriebsfall kommt es infolge eines Wärmeenergieentzugs zu einer Abkühlung des im Tank bevorrateten Wassers. Dabei kann eine Abkühlung des Wassers bis zur Vereisung vorgenommen werden.

Den vorbekannten Konstruktionen ist gemein, dass sich der Verdichter im bestimmungsgemäßen Verwendungsfall aufheizt, wobei die insoweit verbrauchte Aufheizenergie einem von der Geschirrspülmaschine durchgeführten Spülprogramm als Verlustenergie nicht zur Verfügung steht. Dieser Nachteil kommt insbesondere bei als Rollkolbenverdichter ausgebildeten Verdichtern zum Tragen, die bei Geschirrspülmaschinen aufgrund ihrer kompakten und robusten Bauform typischerweise zum Einsatz kommen. So stoßen Rollkolbenverdichter konzeptbedingt das verdichtete, gasförmige und heiße Kältemittel in das eigene Gehäuse aus. Infolge dessen kommt es zur Aufheizung des Rollkolbenverdichters bis auf eine Temperatur, die das Kältemittel infolge seiner Verdichtung im Verdichter annimmt. Es können so Temperaturen an der Oberfläche des Rollkolbenverdichters von bis zu 100° C entstehen, was zu erhöhten Wärmeverlusten durch Strahlungswärme und freie Konvektion führt. Ein Großteil dieser Abwärme wird auf andere Komponenten der Geschirrspülmaschine, auf zur Geschirrspülmaschine benachbarte Möbel und/oder den Aufstellungsuntergrund der Geschirrspülmaschine übertragen und bleibt somit vom eigentlichen Spülprozess ungenutzt.

Die KR 20070046740 A offenbart eine Geschirrspülmaschine mit einem Spülbehälter, einer Wärmepumpeneinrichtung und einer Gebläseeinrichtung, welche dazu dient Trocknungsluft über eine Trocknungsluftleitung in den Spülraum zu fördern. Der Eingang zur Trocknungsluftleitung liegt dabei nahe der Wärmepumpeneinrichtung.

Die EP 2322072 A2 offenbart eine Geschirrspülmaschine mit einem Spülbehälter, einer Wärmepumpeneinrichtung und einem Latentwärmespeicher. Diesem wird in einer ersten Prozessphase mittels der Wärmepumpeneinrichtung zur Aufheizung von Spülflotte Wärme entzogen. Der Latentwärmespeicher ist über einen Fluidkreislauf mit einem am Spülbehälter angeordneten Wärmetauscher wirkgekoppelt, wobei diesem in einer zweiten Prozessphase Wärme entzogen und dem Latentwärmespeicher zugeführt wird.

Die KR 20110064739 B1 offenbart einen Kühlschrank mit einer Wärmepumpeneinrichtung, deren Abwärme einem weiteren Haushaltsgerät zuführbar ist.

Es ist ausgehend vom Vorbeschriebenen die Aufgabe der Erfindung, eine Geschirrspülmaschine der eingangs genannten Art dahingehend weiterzuentwickeln, dass die infolge einer bestimmungsgemäßen Nutzung der Wärmepumpeneinrichtung am Verdichter entstehenden Wärmeverluste konstruktiv minimiert sind.

Zur Lösung dieser Aufgabe wird mit der Erfindung eine Geschirrspülmaschine mit den Merkmalen von Anspruch 1 vorgeschlagen.

Der Verdichter ist vorzugsweise unterhalb des Spülbehälters innerhalb eines Gehäuses angeordnet. Dabei ist das Gehäuse derart dimensioniert, dass es einen Luftzirkulationsraum bereitstellt, so dass Luft um den Verdichter herum zirkulieren kann. Dabei ist das Gehäuse möglichst geschlossen, das heißt im Wesentlichen luftdicht ausgebildet. Dabei meint "im Wesentlichen luftdicht" nicht hermetisch abgedichtet. Die geschlossene Ausgestaltung des Gehäuses soll lediglich sicherstellen, dass im Luftzirkulationsraum befindliche und von der Abwärme des Verdichters erwärmte Luft nicht ungewollt in die das Gehäuse umgebende Atmosphäre entweicht.

Dem Luftzirkulationsraum ist erfindungsgemäß eine Gebläseeinrichtung zugeordnet. Diese sorgt im bestimmungsgemäßen Verwendungsfall für eine Luftzirkulation innerhalb des Gehäuses, so dass der Verdichter luftumspült ist. Es kann so eine gleichmäßige Erwärmung der im Gehäuseinneren befindlichen Luft durch die vom Verdichter im Betriebsfall erzeugte Abwärme erreicht werden.

Die vom Gehäuse beherbergte und im Betriebsfall von der Abwärme des Verdichters erwärmte Luft kann in vorteilhafter Weise zur direkten oder indirekten Aufheizung von im Spülbehälter befindlicher Spülflotte genutzt werden. Somit wird zumindest ein Teil der Verdichterabwärme für die Spülflottenaufheizung nutzbar, wodurch der infolge einer Nutzung der Wärmepumpeneinrichtung unvermeidbar entstehende Wärmeverlust minimiert ist. Dabei erfolgt die Wärmeübertragung durch Konvektion der im Gehäuseinneren befindlichen Luft zwischen Verdichter und Spülbehälter und/oder zwischen Verdichter und einem Frischwassereinlaufsystem. Der im Gehäuseinneren insoweit zirkulierende Luftstrom wird mechanisch mittels der Gebläseeinrichtung erzeugt, was eine optimierte Wärmeübertragung zwischen Luft und Verdichteroberfläche ermöglicht. Ein Wärmeübertrag auf die im Spülbehälter befindliche Spülflotte erfolgt dabei entweder direkt mittels entsprechender Wärmetauscher oder indirekt durch einen Latentwärmespeicher. Dabei hat der Latentwärmespeicher den Vorteil, Verdichterabwärme auch zu einem späteren Zeitpunkt nutzbar zu machen.

Die für die Ausbildung und Aufrechterhaltung einer Luftzirkulation vorgesehene Gebläseeinrichtung ist gemäß einem weiteren Merkmal der Erfindung innerhalb des Gehäuses angeordnet. Es ist so eine kompakte und gegenüber äußeren mechanischen Einflüssen geschützte Bauform gegeben. Dabei ist die Gebläseeinrichtung bevorzugterweise drehzahlgeregelt ausgeführt, so dass der von ihr erzeugte Luftstrom abhängig von der Verdichtertemperatur oder der sich einstellenden Lufttemperatur oder der sich einstellenden Spülflottentemperatur geregelt werden kann. Dazu wird mindestens eine dieser Temperaturen fortwährend gemessen. Die Erfassung der Lufttemperatur erfolgt vorzugsweise an zwei voneinander unabhängigen Messstellen, um auch die Wärmeleistung der im Luftstrom befindlichen Wärmeübertrager zu erfassen. Die Gebläseeinrichtung wird insbesondere derart geregelt, dass die Lufttemperatur innerhalb des Luftzirkulationsraumes während eines Aufheizvorgangs innerhalb eines Spülprogramms zumindest zeitweise, vorzugsweise zumindest nahezu während des gesamten Aufheizvorgangs im Bereich unterhalb der Oberflächentemperatur des Verdichters und oberhalb der Temperatur der Spülflotte liegt und/oder in einem Bereich zwischen 50°C und 80°C.

Gemäß einem weiteren Merkmal der Erfindung ist vorgesehen, dass das Gehäuse benachbart zum Spülbehälter und/oder zu einem Frischwassereinlaufsystem ausgebildet ist. Der Wärmeübertragungsweg ist so möglichst kurz ausgefüllt, womit unnötige Wärmeübertragungsverluste vermieden sind. Gemäß einer besonders einfachen und zugleich effektiven Bauform ist vorgesehen, dass das Gehäuse eine Gehäusewandung aufweist, die abschnittsweise vom Spülbehälter und/oder vom Frischwassereinlaufsystem bereitgestellt ist. Es ist insofern keine doppelwandige Ausgestaltung vorgesehen. Vielmehr dient die vom Spülbehälter und/oder dem Frischwassereinlaufsystem ohnehin schon zur Verfügung gestellte Wand zugleich auch dem Gehäuse zumindest abschnittsweise als Gehäusewandung. Es kann so über die gemeinsame Gehäusewandung ein direkter Wärmeübertrag von der durch die Verdichterabwärme aufgeheizten Luft auf die im Spülbehälter befindliche Spülflotte und/oder auf im Frischwassereinlaufsystem geführtes Frischwasser stattfinden.

Gemäß einem weiteren Merkmal der Erfindung ist vorgesehen, dass die Gehäusewandung abschnittsweise wärmeisoliert ausgebildet ist. Dabei sind bevorzugterweise diejenigen Abschnitte der Gehäusewandung wärmeisoliert ausgebildet, die nicht in Wärmeübertragungskontakt mit dem Spülbehälter und/oder dem Frischwassereinlaufsystem stehen. Auf diese Weise ist sichergestellt, dass über am Wärmeaustausch nicht beteiligte Gehäusewandungen ungewollt Wärme an die das Gehäuse umgebende Atmosphäre abgegeben wird.

Zwischen dem Gehäuse und dem Spülbehälter und/oder zwischen dem Gehäuse und dem Frischwassereinlaufsystem ist gemäß einem weiteren Merkmal der Erfindung bevorzugterweise ein Wärmetauscher ausgebildet. Die Effektivität der Wärmeübertragung wird hierdurch noch einmal gesteigert. Mittels der Wärmetauscher findet eine direkte Übertragung der Wärmeenergie der heißen Luft auf die Spülflotte bzw. auf das Frischwasser statt. Die Wärmetauscher sind vorzugsweise jeweils zweigeteilt ausgebildet. Der jeweils eine Teil befindet sich außerhalb des Spülbehälters bzw. des Frischwassereinlaufsystems und hat wärmeleitende Elemente speziell für die Luftströmung. Der jeweils zweite Teil ist innerhalb des Spülbehälters bzw. innerhalb des Frischwassereinlaufsystems angeordnet und hat wärmeleitende Elemente speziell für Wasser.

Der zwischen Gehäuse und Frischwassereinlaufsystem ausgebildete Wärmetauscher kann auch einteilig ausgebildet sein, beispielsweise dadurch, dass ein oder mehrere Bleche aus Metall in Form von Lamellen in die entsprechende wasserführende Komponente integriert sind. Dabei besteht die wasserführende Komponente typischerweise aus Kunststoff, so dass entsprechend gestaltete Metalleinleger denkbar sind, welche mit Kunststoff im 2-Komponenten-Verfahren umspritzt werden und im bestimmungsgemäßen Verwendungsfall der Geschirrspülmaschine als Wärmetauscher fungieren.

Alternativ oder in Kombination zu einer direkten Wärmeübertragung erfolgt eine indirekte Wärmeübertragung, zu welchem Zweck gemäß einem weiteren Merkmal der Erfindung innerhalb des Gehäuses ein Latentwärmespeicher angeordnet ist, der mit dem Spülbehälter und/oder dem Frischwassereinlaufsystem in Wirkverbindung steht.

Während eines bestimmungsgemäßen Betriebs des Verdichters gibt dieser Wärme durch Strahlung und Konvektion an den Latentwärmespeicher ab, dessen eingefrorene Flüssigkeit hierdurch aufgeschmolzen wird. Diese Flüssigkeit, bei der es sich beispielsweise um ein Hydrat handelt, behält ihren flüssigen Aggregatzustand metastabil auch unterhalb der Schmelztemperatur bei. Sie kristallisiert bei leichter mechanischer Belastung exotherm aus. Die insoweit entstehende Wärme wird in schon vorbeschriebener Weise auf die im Spülbehälter befindliche Spülflotte bzw. auf das im Frischwassereinlaufsystem befindliche Frischwasser übertragen.

Die Wärmeenergie kann während einer ersten Aufheizphase der Spülflotte im Latentwärmespeicher gespeichert werden und während einer weiteren nachgelagerten Aufheizphase, wie zum Beispiel der Klarspülphase wieder an die Spülflotte abgegeben werden. Die Schmelztemperatur der Flüssigkeit im Latentwärmespeicher liegt in einem Bereich zwischen 30° C und 70° C, bevorzugterweise zwischen 40° C und 60° C. In diesem Temperaturbereich ist sichergestellt, dass die Flüssigkeit während der Aufheizphase vollständig verflüssigt und so die Energie dauerhaft speichert. Die Aktivierung der Kristallisation der Flüssigkeit erfolgt von außerhalb mechanisch über einen Aktor, welcher zum Beispiel ein Metallplättchen innerhalb der Flüssigkeit verformt. Hierbei kann zum Beispiel ein Stößel elektromechanisch bewegt werden, welcher von einem Faltenbalg umschlossen ist. Letzterer dichtet gleichzeitig gegenüber dem Behälter des Latentwärmespeichers ab, in welchem die Flüssigkeit gelagert ist. Alternativ kann der Latentwärmespeicher auch durch eine Membran aktiviert werden, welche sich durch Wasserdruck verformt und so die Kristallisation auslöst. Dies kann beispielsweise dadurch geschehen, dass Spülflotte in einer Rohrschlange an der Membran vorbeigeleitet wird. Bei Druckbeaufschlagung verformt sich die Membran und löst die Kristallisation aus. Somit wird die Wärme erst dann abgegeben, wenn die Spülflotte durch die vorzugsweise als Wärmetauscher fungierende Rohrschlange geleitet wird. Dieser parallele Kreislauf kann zum Beispiel durch ein Magnetventil geschaltet werden. Diese Lösung bietet den Vorteil, dass die Wärmeübertragung und die Kristallisation zeitgleich ausgelöst werden, wodurch die Wärmeenergie optimiert vom Wärmespeicher auf die Spülflotte übertragen wird.

Gemäß einem weiteren Merkmal der Erfindung ist vorgesehen, dass innerhalb des Gehäuses ein Luftleitblech angeordnet ist.

Das Luftleitblech dient der konstruktiven Bereitstellung eines strömungsoptimierten Luftzirkulationsraums. Dabei sorgt das Luftleitblech insbesondere dafür, dass kein Kurzschlussluftstrom der Luft durch die Gebläseeinrichtung entsteht und die Luft möglichst um den gesamten Verdichter herumgeleitet wird. Es können ein Luftleitblech oder mehrere Luftleitbleche vorgesehen sein, die insbesondere in Abhängigkeit der Ausgestaltung der Gebläseeinrichtung ausgebildet sind. Dabei können als Gebläseeinrichtung ein Radialluftgebläse oder ein Axialluftgebläse vorgesehen sein. Ferner können für die Ausbildung einer optimierten Luftzirkulation weitere Luftleitelemente wie zum Beispiel Rippen vorgesehen sein, beispielsweise außenseitig des Verdichters und/oder innenseitig der Innenwandung des den Verdichter aufnehmenden Gehäuses.

Gemäß einer weiteren Ausführungsform der Erfindung oder zusätzlich zu den Merkmalen der vorgenannten Ausführungsform ist vorgesehen, dass dem Verdichter ein Wärmetauscher zugeordnet ist, der mit dem Spülraum in strömungstechnischer Verbindung steht.

Der Verdichter ist demnach mit einem Wärmetauscher wirkgekoppelt, wobei der Wärmetauscher seinerseits mit dem Spülraum in strömungstechnischer Verbindung steht. Dabei gestattet es die strömungstechnische Verbindung des Wärmetauschers mit dem Spülraum, dass durch den Wärmetauscher aus dem Spülraum stammende Spülflotte geführt werden kann. Aufgrund der Zuordnung des Verdichters zum Wärmetauscher kann so vom Verdichter stammende Abwärme auf die Spülflotte direkt übertragen werden. Diese Ausgestaltung gestattet es mithin, die vom Verdichter im bestimmungsgemäßen Verwendungsfall der Wärmepumpeneinrichtung erzeugte Abwärme zur wunschgemäßen Aufheizung der Spülflotte zu nutzen.

Dabei muss der Wärmetauscher nicht am Spülraum befestigt sein. Es ist eine Anordnung des Wärmetauschers auch am Verdichter möglich, was aus Gründen der vereinfachten Montage bevorzugt ist. Dabei ist der Wärmetauscher zumindest spülflotteneingangsseitig vorzugsweise schaltbar ausgebildet, das heißt eine Beschickung des Wärmetauschers mit Spülflotte findet nur dann statt, wenn der Verdichter nutzbare Abwärme zur Verfügung stellt. Andernfalls bleibt der Wärmetauscher von Spülflotte undurchströmt.

Der Wärmetauscher ist gemäß einem weiteren Merkmal der Erfindung eine strömungstechnisch an den Spülraum angeschlossene Rohrleitung, der abschnittsweise außenseitig des Verdichters am Verdichter angeordnet ist. Dabei kann die Rohrleitung zumindest abschnittsweise Rohrwindungen aufweisen. Diese Rohrwinden umgreifen den Verdichter außenseitig zumindest teilweise, so dass insgesamt eine möglichst große Wärmeaustauscherfläche bereitgestellt ist.

Der Wärmetauscher ist gemäß einer ersten Ausführungsform an einen separaten Wasserkreislauf angeschlossen bzw. bildet einen eigenen Wasserkreislauf aus, welcher parallel zum Hauptkreislauf durch die Umwälzpumpe gespeist ist. Alternativ hierzu kann der Wärmetauscher auch so ausgeführt sein, dass er am Spülbehälter angeordnet ist, wobei innerhalb des Spülbehälters eine trichterförmige Spülflottenzuführung vorgesehen ist, in welcher sich die Spülflotte staut, bevor sie durch den Wärmetauscher hindurch der Schwerkraft folgend zu einem tiefer gelegenen Bereich des Spülbehälters abfließt. Diese Ausgestaltung hat den Vorteil, dass kein zusätzlicher Spülflottenkreislauf parallel zum Hauptspülflottenkreislauf besteht, welcher durch die Umwälzpumpe betrieben wird. Somit wird kein zusätzlicher Druckabfall erzeugt.

Gemäß einer weiteren Ausführungsform der Erfindung oder zusätzlich zu den Merkmalen der vorgenannten Ausführungsformen ist vorgesehen, dass dem Verdichter kältemitteleingangsseitig ein Wärmetauscher vorgeschaltet ist, wobei der Verdichter und der Wärmetauscher innerhalb des den Luftzirkulationsraum bereitstellenden Gehäuses angeordnet sind.

Die vom Gehäuse beherbergte und im Betriebsfall von der Abwärme des Verdichters erwärmte Luft kann in vorteilhafter Weise zur Aufheizung von im Kältemittelkreislauf der Wärmepumpeneinrichtung geführten Kältemittel genutzt werden.

Zur Wärmeübertragung auf das Kältemittel ist ein Wärmetauscher, auch Überhitzer genannt, vorgesehen, der dem Verdichter in Zirkulationsrichtung des Kältemittels strömungstechnisch vorgeschaltet ist. Dieser Wärmetauscher ist mithin dem Verdichter kältemitteleingangsseitig vorgeschaltet, das heißt im Kältemittelkreislauf der Wärmepumpeneinrichtung zirkulierendes Kältemittel gelangt unter strömungstechnischer Zwischenschaltung des Wärmetauschers, das heißt des Überhitzers zum Verdichter.

Die Wärmeübertragung auf das im Kältemittelkreislauf geführte Kältemittel erfolgt durch Konvektion der im Gehäuseinneren befindlichen Luft zwischen Verdichter und Wärmetauscher. Dabei wird der im Gehäuseinneren insoweit zirkulierende Luftstrom mechanisch mittels der Gebläseeinrichtung erzeugt, was eine optimierte Wärmeübertragung zwischen Luft und Verdichteroberfläche ermöglicht.

Im bestimmungsgemäßen Verwendungsfall wird das dem Verdichter zuzuführende Kältemittel vor einem Einströmen in den Verdichter vorgewärmt. Zu diesem Zweck wird die Verdichterabwärme mittels des Wärmetauschers auf das Kältemittel übertragen, was zu einer indirekten Kühlung des Verdichters führt. Der Wärmeübergang erfolgt dabei nahezu verlustfrei, wenn der Wärmetauscher innerhalb des Gehäuses so angeordnet ist, dass sich eine freie Konvektion aufgrund von Temperaturunterschieden der vom Gehäuse beherbergten Luft einstellt. Zur weiteren Optimierung kann das den Verdichter und den Wärmetauscher beherbergende Gehäuse wärmeisoliert ausgebildet sein, so dass ein ungewollter Wärmeaustrag in die das Gehäuse umgebende Atmosphäre unterbunden ist. Gemäß einem weiteren Merkmal der Erfindung ist vorgesehen, dass der Wärmetauscher im einfachsten Ausführungsfall eine vom Kältemittel durchströmte Rohrleitung ist. Diese Rohrleitung ist innerhalb des Gehäuses verlegt, so dass ein Wärmeübertrag von der im Gehäuse befindlichen warmen Luft auf die Rohrleitung und damit auf das durch die Rohrleitung hindurchgeführte Kältemittel stattfinden kann.

Die Rohrleitung weist bevorzugterweise zumindest abschnittsweise eine Mehrzahl von Windungen auf. Damit wird die insgesamt zur Verfügung stehende Wärmekontaktübertragungsfläche erhöht, was einen gesteigerten Wärmeeintrag in das Kältemittel gestattet.

Weitere Merkmale und Vorteile der Erfindung ergeben sich aus der nachfolgenden Beschreibung anhand der Figuren. Dabei zeigen
- Fig. 1: in schematischer Frontansicht eine Geschirrspülmaschine nach der Erfindung gemäß einer ersten Ausführungsform;
- Fig. 2: in schematischer Frontansicht eine Geschirrspülmaschine nach der Erfindung gemäß einer zweiten Ausführungsform;
- Fig. 3: in schematischer Frontansicht eine Geschirrspülmaschine nach der Erfindung gemäß einer weiteren Ausführungsform;
- Fig. 4: in schematischer Frontansicht eine Geschirrspülmaschine nach der Erfindung gemäß einer weiteren Ausführungsform;
- Fig. 5: in schematischer Frontansicht eine Geschirrspülmaschine nach der Erfindung gemäß einer weiteren Ausführungsform;
- Fig. 6: in schematischer Frontansicht eine Geschirrspülmaschine nach einem weiteren Beispiel, welches jedoch unter den Wortlaut der vorliegenden Ansprüche fällt;

- Fig. 7: in schematischer Seitenansicht die erfindungsgemäße Geschirrspülmaschine gemäß einer weiteren Ausführungsform;
- Fig. 8: in schematischer Seitenansicht die erfindungsgemäße Geschirrspülmaschine gemäß einer weiteren Ausführungsform;
- Fig. 9: in schematischer Seitenansicht die erfindungsgemäße Geschirrspülmaschine gemäß einer weiteren Ausführungsform;
- Fig. 10 in: schematischer Fronansicht die erfindungsgemäße Geschirrspülmaschine nach Fig. 9;
- Fig. 11: in schematischer Frontansicht eine Geschirrspülmaschine nach der Erfindung gemäß einer weiteren Ausführungsform;
- Fig. 12: in schematischer Frontansicht eine Geschirrspülmaschine nach der Erfindung gemäß einer weiteren Ausführungsform;
- Fig. 13: in schematischer Seitenansicht die erfindungsgemäße Geschirrspülmaschine gemäß einer weiteren Ausführungsform;
- Fig. 14: in schematischer Frontansicht eine Geschirrspülmaschine nach der Erfindung gemäß einer weiteren Ausführungsform;
- Fig. 15: in schematischer Frontansicht eine Geschirrspülmaschine gemäß dem Stand der Technik.

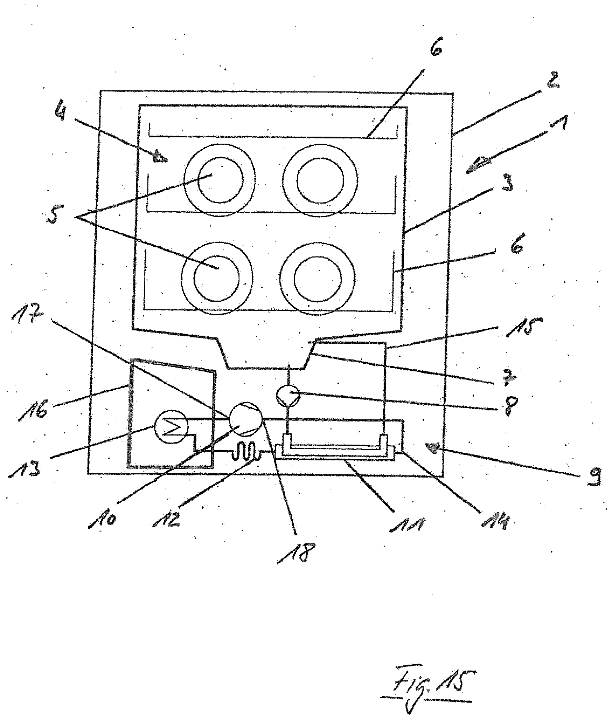

Figur 15 lässt in schematischer Frontansicht eine Geschirrspülmaschine 1 nach dem Stand der Technik erkennen. Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist. Bevorzugterweise verfügt eine solche Sprüheinrichtung über Sprüharme, die jeweils verdrehbar innerhalb des Spülbehälters 3 angeordnet sind.

Im gezeigten Ausführungsbeispiel dienen zur Aufnahme des zu reinigenden Spülguts 5 Spülkörbe 6, wobei drei solcher Spülkörber 6 vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende und in den Figuren nicht näher dargestellte Versorgungsleitungen ist die in den Figuren ebenfalls nicht dargestellte Sprüheinrichtung an die Umwälzpumpe 8 strömungstechnisch angeschlossen. Im bestimmungsgemäßen Verwendungsfall kann damit eine Beschickung der Sprüheinrichtung mit Spülflotte mittels der Umwälzpumpe 8 stattfinden.

Die Geschirrspülmaschine 1 verfügt des Weiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium, das heißt ein Kältemittel geführt ist. Zum Anschluss des Verdichters 10 an den Strömungskreislauf 14 verfügt der Verdichter 10 über einen Kältemitteleingang 17 und einen Kältemittelausgang 18.

Die in den Figuren beispielhaft dargestellte Wärmepumpeneinrichtung 9 ist eine sog. Wasser-Wasser-Wärmepumpeneinrichtung, dergemäß der Verdampfer 13 innerhalb eines Tanks 16 angeordnet ist, der mit Wasser als Wärmeträgermedium befüllt ist. Die im Weiteren erläuterte erfindungsgemäße Ausgestaltung ist auf die Ausbildung einer Wärmepumpeneinrichtung als Wasser-Wasser-Wärmepumpeneinrichtung nicht beschränkt. Auch mit einer Luft-Wasser-Wärmepumpeneinrichtung ausgerüstete Geschirrspülmaschinen können in erfindungsgemäßer Weise ausgebildet sein.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Kältemittel auf die Spülflotte statt. Zu diesem Zweck ist ein an die Umwälzpumpe 8 angeschlossener Umwälzkreislauf 15 vorgesehen, der der Spülflottenumwälzung dient. Die im Betriebsfall im Verflüssiger 11 durch Verflüssigung des Kältemittels frei werdende Wärmeenergie wird mithin auf die im Umwälzkreislauf 15 umgewälzte Spülflotte übertragen, zu welchem Zweck ein entsprechend ausgebildeter Wärmetauscher vorgesehen ist.

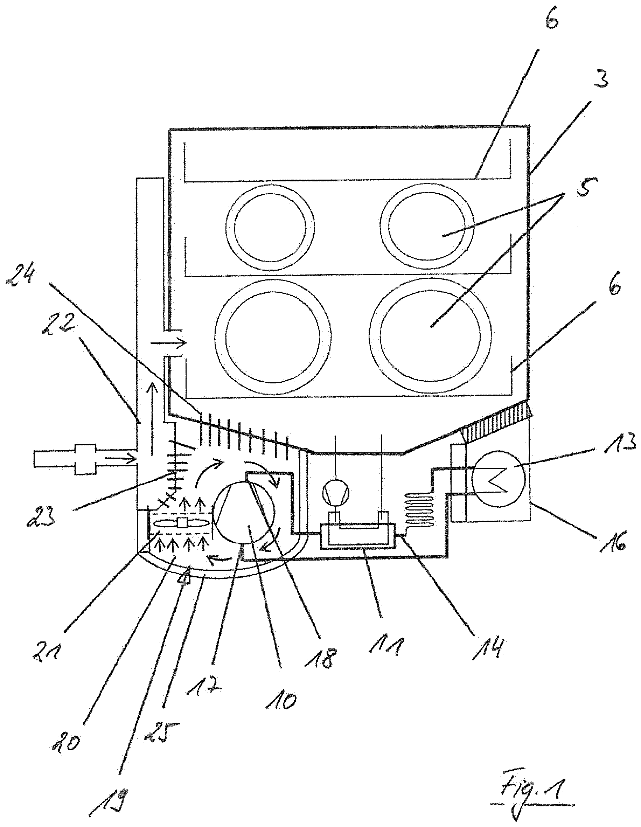

Dem Verflüssiger 11 ist strömungstechnisch der Verdichter 10 vorgeschaltet, in dem das in gasförmiger Form vorliegende Kältemittel komprimiert und so auf ein höheres Temperaturniveau gebracht wird. Infolge einer solchen Kältemittelkomprimierung erwärmt sich der Verdichter 10, bei dem es sich beispielsweise um einen Rollkolbenverdichter handelt. Die infolge der Erwärmung des Verdichters 10 entstehende Abwärme steht für einen von der Geschirrspülmaschine 1 durchzuführenden Spülprozess, das heißt insbesondere für eine Aufheizung der Spülflotte nicht mehr zur Verfügung. Mittels der erfindungsgemäßen Ausgestaltung, wie sie in verschiedenen Ausführungsformen in den Figuren 1 bis 14 gezeigt ist, wird die Abwärme des Verdichters 10 zumindest teilweise genutzt und zur Unterstützung der Aufwärmung der Spülflotte rückgeführt. Damit ist der infolge der Abwärme des Verdichters 10 einhergehende Wärme- bzw. Energieverlust minimiert.

Wie Fig. 1 anhand einer ersten Ausführungsform erkennen lässt, verfügt die erfindungsgemäß ausgebildete Geschirrspülmaschine 1 über ein Gehäuse 19, innerhalb welchem der Verdichter 10 angeordnet ist. Dabei stellt das Gehäuse 19 einen Luftzirkulationsraum 20 bereit, so dass im bestimmungsgemäßen Verwendungsfall Luft um den Verdichter 10 herumzirkulieren kann, wie dies die in Fig. 1 schematisch eingezeichneten Pfeile kenntlich machen. Zur Ausbildung einer Luftströmung um den Verdichter 10 herum ist eine Gebläseeinrichtung 21 vorgesehen, die dem Luftzirkulationsraum 20 zugeordnet ist. Dabei zeigt Fig. 1 eine Ausführungsform, dergemäß die Gebläseeinrichtung 21 innerhalb des Gehäuses 19 angeordnet ist.

Im bestimmungsgemäßen Verwendungsfall sorgt die Gebläseeinrichtung 21 für eine Zirkulation der vom Gehäuse 19 beherbergten Luft. Infolge einer solche Luftumwälzung kommt es auch zu einer Umspülung des Verdichters 10, so dass von einem erwärmten Verdichter 10 ausgehende Abwärme zu einer vergleichmäßigten Aufheizung der im Gehäuse 19 befindlichen Luft führt.

Das Gehäuse 19 ist unter jeweiliger Zwischenordnung eines Wärmetauschers 23 bzw. 24 direkt benachbart zum Spülbehälter 3 und dem Frischwassereinlaufsystem 22 angeordnet, so dass ein Wärmeübertrag aus der im Gehäuse 19 befindlichen erwärmten Luft auf die im Spülbehälter 3 befindliche Spülflotte und das im Frischwassereinlaufsystem 22 befindliche Frischwasser stattfindet. Dabei erfolgt die Wärmeübertragung durch Konvektion der Luft zwischen Verdichter 10 und Spülbehälter 3 bzw. zwischen Verdichter 10 und Wassereinlaufsystem 22. Der Luftstrom innerhalb des Gehäuses 19 wird durch die Gebläseeinrichtung 21 erzeugt, wodurch eine optimierte Wärmeübertragung zwischen Luft und der äußeren Oberfläche des Verdichters 10 ermöglicht ist.

Wie Fig. 1 des Weiteren erkennen lässt, weist das Gehäuse 19 eine Gehäusewandung auf, die abschnittsweise vom Spülbehälter 3 einerseits und dem Frischwassereinlaufsystem 22 andererseits bereitgestellt ist. Es ist so im Überdeckungsbereich zwischen Gehäuse 19 und Spülbehälter 3 bzw. im Überdeckungsbereich zwischen Gehäuse 19 und Frischwassereinlaufsystem 22 auf eine doppelwandige Ausgestaltung verzichtet, was den erfindungsgemäßen Aufbau insgesamt kompakt und effektiv in der Wärmeübertragung macht.

Es ist des Weiteren zur Vermeidung unnötiger Energieverluste vorgesehen, dass die Gehäusewandung des Gehäuses 19 zumindest abschnittsweise wärmeisoliert ausgebildet ist, zu welchem Zweck die Gehäusewandung des Gehäuses 19 zumindest abschnittsweise mit einer Wärmeisolierung 25 ausgerüstet ist.

Die zwischen Gehäuse 19 und Spülbehälter 3 bzw. zwischen Gehäuse 19 und Frischwassereinlaufsystem 22 ausgebildeten Wärmetauscher 23 und 24 sind vorzugsweise jeweils zweiteilig ausgebildet. Ein jeweils erster Teil befindet sich außerhalb des Spülbehälters 3 bzw. des Frischwassereinlaufsystems 22 und verfügt über wärmeleitende Elemente, die speziell für eine Luftumströmung ausgebildet sind. Der jeweils zweite Teil der Wärmetauscher 23 und 24 ist innerhalb des Spülbehälters 3 bzw. des Frischwassereinlaufsystems 22 angeordnet und stellt wärmeleitende Elemente bereit, die insbesondere mit Blick auf eine Umspülung mit Wasser ausgebildet sind. Im einfachsten Fall kann ein Wärmeübertrag allein über die Gehäusewand stattfinden, die das Gehäuse 19 vom Spülbehälter 3 bzw. das Gehäuse 19 vom Frischwassereinlaufsystem 22 trennt.

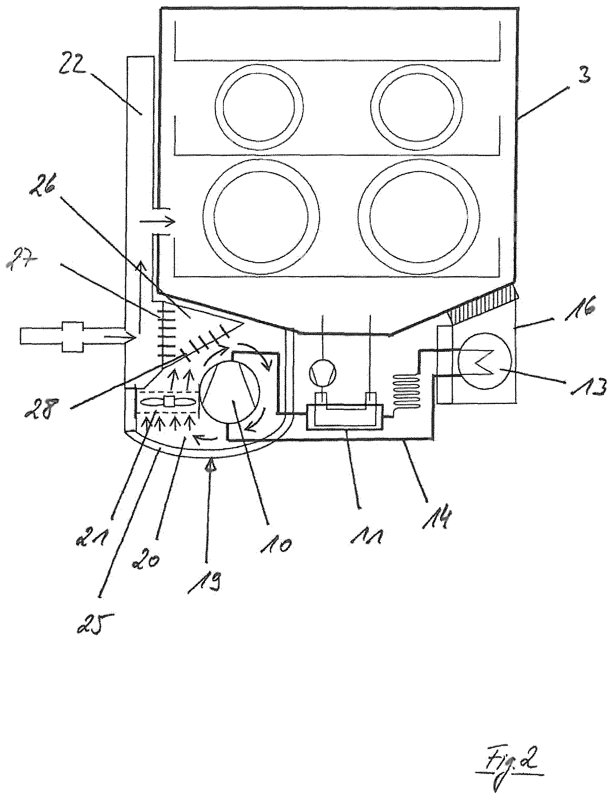

Die Ausführungsform nach Fig. 2 lässt in Abwandlung zur Ausführungsform nach Fig. 1 einen innerhalb des Gehäuses 19 angeordneten Latentwärmespeicher 26 erkennen. Dieser steht über entsprechende Wärmetauscher 27 und 28 mit der im Gehäuse 19 umgewälzten Luft einerseits und dem durch das Frischwassereinlaufsystem 22 hindurchgeführten Frischwasser andererseits in Wirkverbindung.

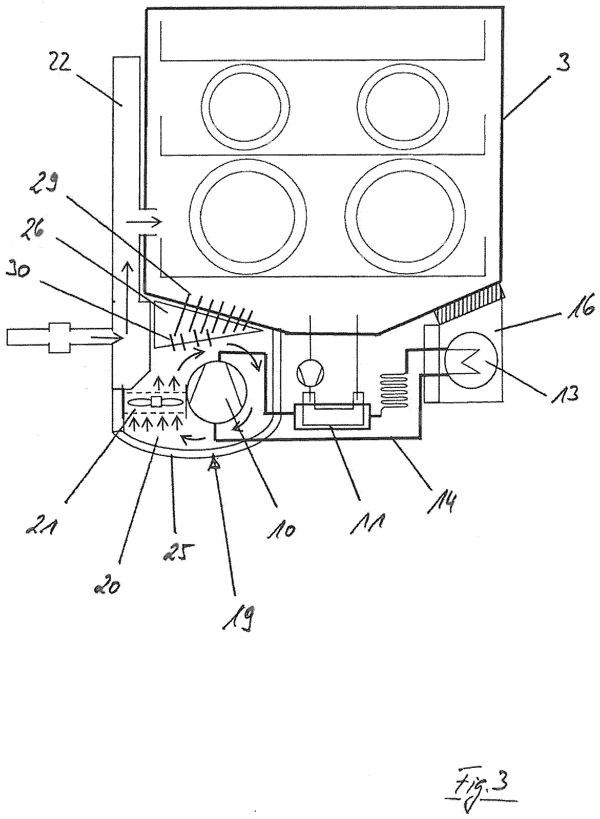

Eine zur Ausführungsform nach Fig. 2 vergleichbare Ausführungsform zeigt Fig. 3. Auch gemäß dieser Ausführungsform ist ein Latentwärmespeicher 26 vorgesehen, wobei in Abwandlung zur Darstellung nach Fig. 2 zwei Wärmetauscher 29 und 30 vorgesehen sind, die einerseits mit der im Gehäuse 19 zirkulierten Luft und andererseits mit der im Spülbehälter 3 umgewälzten Spülflotte in Wirkverbindung stehen.

Der Latentwärmespeicher 26 sowohl nach der Ausführungsform gemäß Fig. 2 als auch nach der Ausführungsform gemäß Fig. 3 dient in vorteilhafter Weise dazu, vom Verdichter 10 abgegebene Abwärme zwischenzuspeichern, um sie zu einem späteren Zeitpunkt zur Aufheizung von Spülflotte und/oder Frischwasser wieder freizugeben. Zu diesem Zweck verfügt der Latentwärmespeicher über ein Speichermedium in Form beispielsweise eines Hydrats, das sich nach einem vorangegangenen Wärmeeintrag in einem flüssigen Aggregatzustand befindet. Eine Überführung des Wärmespeichers in einen festen Aggregatzustand infolge einer Kristallisation erfolgt exotherm, das heißt unter Wärmeabgabe.

Im bestimmungsgemäßen Verwendungsfall gibt der Verdichter 10 Wärme durch Strahlung und Konvektion an den Latentwärmespeicher 26 ab, infolge dessen eingefrorene Flüssigkeit geschmolzen, das heißt verflüssigt wird. Dabei behält die Flüssigkeit ihren flüssigen Aggregatzustand metastabil auch unterhalb der Schmelztemperatur bei und kristallisiert erst infolge einer mechanischen Belastung aus. Dabei wird die Wärme wieder abgegeben. Die Wärmeenergie kann während einer ersten Aufheizphase der Spülflotte im Latentwärmespeicher gespeichert werden und während einer weiteren nachgelagerten Aufheizphase an die Spülflotte wieder abgegeben werden.

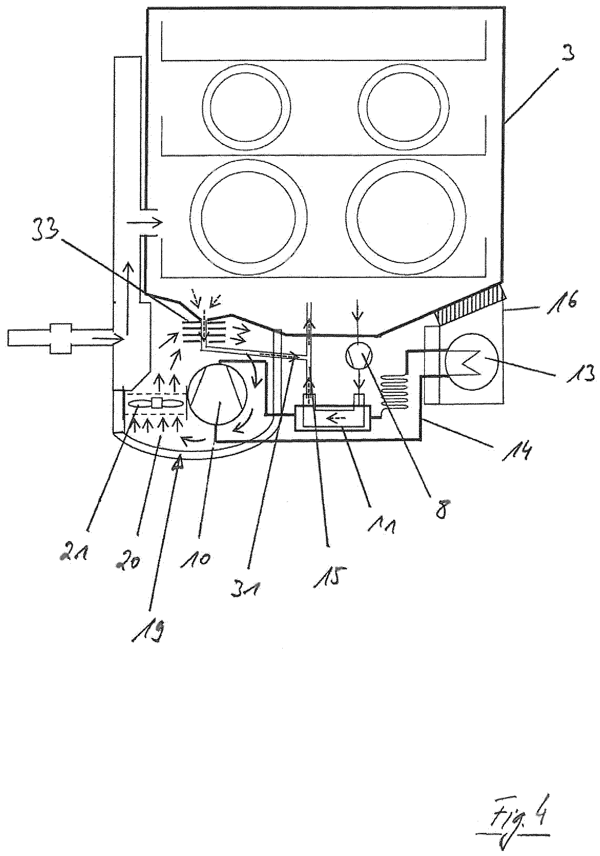

Eine weitere Ausführungsform zeigt Fig. 4. Danach ist eine Rohrleitung 31 vorgesehen, die durch das Gehäuse 19 geführt ist. Diese Rohrleitung ist strömungstechnisch an den Spülraum 4 angeschlossen, so dass in Entsprechung der in Fig. 4 beispielhaft eingezeichneten Pfeile Spülflotte aus dem Spülraum 4 geführt und mittels der Rohrleitung 31 zum Umwälzkreislauf 15 geführt wird. Die im Betriebsfall heiße Luft im Gehäuse 19 erwärmt die durch die Rohrleitung 31 hindurchgeführte Spülflotte, so dass ein Wärmeübertrag aus der im Gehäuse 19 befindlichen Luft auf die Spülflotte stattfindet. Ein solcher Wärmeübertrag kann noch durch einen Wärmetauscher 33 unterstützt werden, bei dem es sich beispielsweise um einfache Lamellen handelt, die außenseitig der Rohrleitung 31 angeordnet sind und als Wärmeleitelemente dienen, die einen besonders effektiven Wärmeübergang aus der vom Gehäuse 19 bevorrateten Luft ermöglichen.

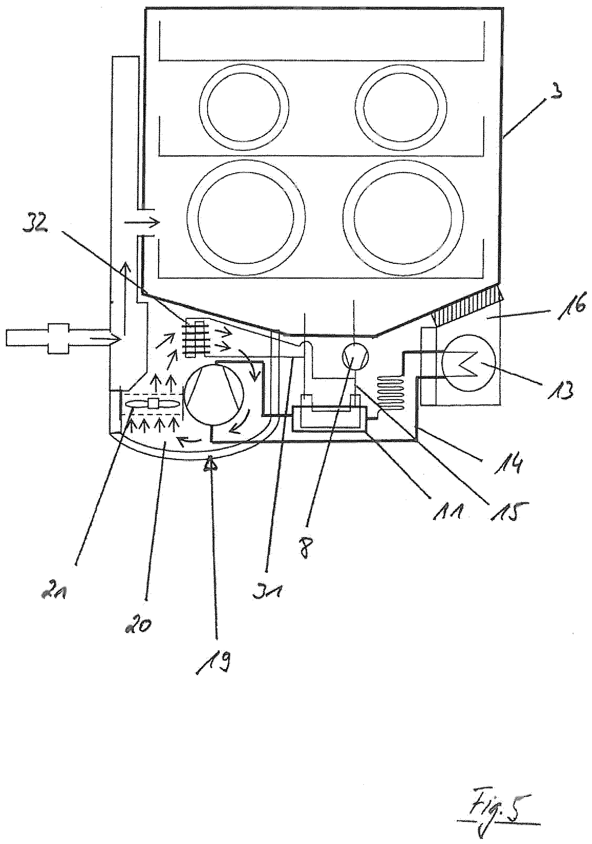

Fig. 5 zeigt eine zu Fig. 4 ähnliche Ausführungsform. Dabei ist gemäß der Ausführungsform nach Fig. 5 vorgesehen, dass die Rohrleitung 31 sowohl spülflotteneingangsseitig als auch spülflottenausgangssseitig an den Umwälzkreislauf 15 angeschlossen ist. Es findet mithin keine Spülflottenentnahme direkt aus dem Spülbehälter 3 statt, wie dies gemäß der Ausführungsform nach Fig. 4 vorgesehen ist.

Die Rohrleitung 31 kann im Übrigen zumindestens abschnittsweise in Windungen geführt sein, die als Teil eines Wärmetauschers 32 ausgebildet sind. Auf diese Weise wird ein besonders effizienter Wärmeübergang aus der vom Gehäuse 19 bevorrateten Luft erreicht.

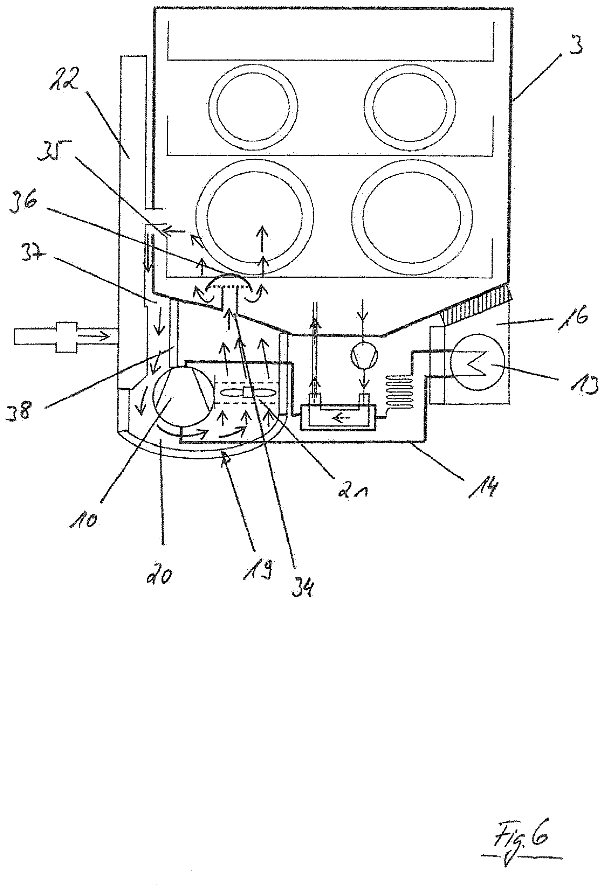

Gemäß einem Beispiel, welches nicht unter den Wortlaut der vorliegenden Ansprüche fällt und in Fig. 6 dargestellt ist, ist das Gehäuse 19 an den Spülraum 4 strömungstechnisch angeschlossen. Zu diesem Zweck ist eine in den Spülraum 4 einmündende Einlassöffnung 34 und eine aus dem Spülbehälter 4 ausmündende Auslassöffnung 35 vorgesehen. Im Betriebsfall kann in Entsprechung der schematisch in Fig. 6 eingezeichneten Pfeile von der Gebläseeinrichtung 21 umgewälzte Luft aus dem Gehäuse 19 über die Einlassöffnung 34 in den Spülraum 4 eingefördert werden. In Entsprechung der eingeförderten Luftmenge wird vergleichsweise kühle Spülraumluft über die Auslassöffnung 35 aus dem Spülbehälter 3 herausgefördert. Über einen Kanal 37 gelangt diese Luft in das Gehäuse 19, wo am Verdichter 10 eine erneute Erwärmung der Luft stattfindet. Um eine Kurzschlussströmung zu vermeiden, ist innerhalb des Gehäuses 19 ein Luftleitblech 38 vorgesehen.

Im Betriebsfall gibt die in den Spülbehälter 3 eingeleitete heiße Luft direkt ihre Wärme an das Spülgut 5 und an die im Spülbehälter 3 befindliche Spülflotte ab und wird in Entsprechung der Führung des Kanals 37 am Frischwassereinlaufsystem 22 vorbei wieder zurück in das Gehäuse 19 zum Verdichter 10 geleitet, wo sie wieder Abwärme vom Verdichter 10 aufnimmt. Zum Schutz vor einem ungewollten Eindringen von Spülflotte in das Gehäuse 19 ist im gezeigten Ausführungsbeispiel die Einlassöffnung 34 spülbehälterseitig mittels eines Spritzschutzes 36 abgedeckt.

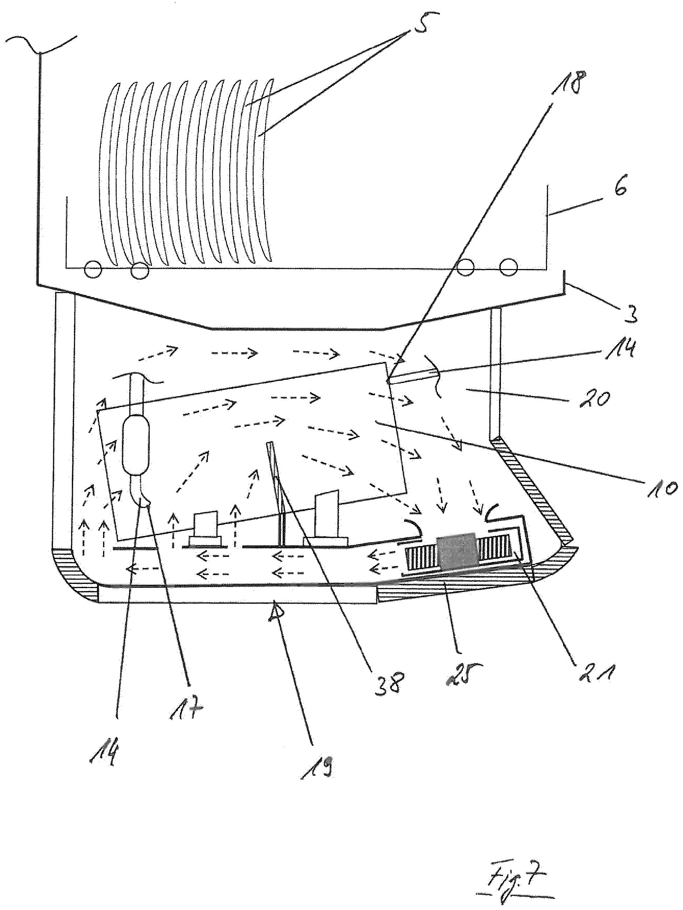

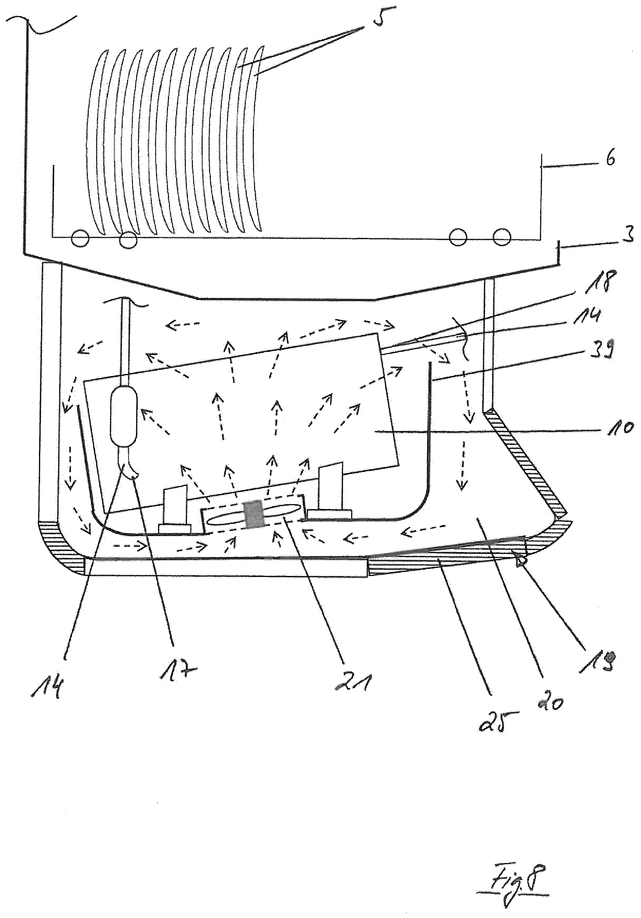

Um eine Luftzirkulation um den Verdichter 10 herum zu erreichen, können zusätzliche Strömungselemente wie zum Beispiel Luftleitbleche 38 und 39 vorgesehen sein, wie dies die Darstellungen nach den Fign. 7 und 8 erkennen lassen. Dabei dienen derartige Strömungselemente insbesondere dazu, ungewollte Kurzschlussluftströmungen zu vermeiden.

Die Ausführungsform nach Fig. 7 zeigt eine Gebläseeinrichtung 21 in der Ausgestaltung eines Radialluftgebläses, welches die Luft axial ansaugt und radial durch einen Luftkanal mit Austrittsöffnungen bläst. Das Luftleitblech 38 dient als Trennwand und dichtet luftdicht zum Gehäuse 19 ab, womit dafür gesorgt ist, dass die Luft möglichst um den gesamten Verdichter 10 zirkulieren kann. Für eine solche Luftabdichtung eignet sich insbesondere ein Luftleitblech 38 aus einem Schaumstoff, einem Vlies oder aus einem Kunststoff, beispielsweise in Form einer TPE-Dichtung.

Fig. 8 zeigt ein Ausführungsbeispiel mit einer als Axialgebläse ausgebildeten Gebläseeinrichtung 21. Ein Luftleitblech 39 ist wannenförmig um den Verdichter 10 herum ausgebildet. Innerhalb dieser Wanne wird eine Luftströmung durch das Gebläse nach oben erzwungen. Außerhalb der so ausgebildeten Wanne wird die Luft wieder angesaugt, wie dies die in Fig. 8 beispielhaft eingezeichneten Pfeile symbolisieren. Die insgesamt erzeugte Luftströmung lässt sich durch weitere Strömungsleitelemente, wie zum Beispiel Rippen oder dergleichen noch weiter optimieren.

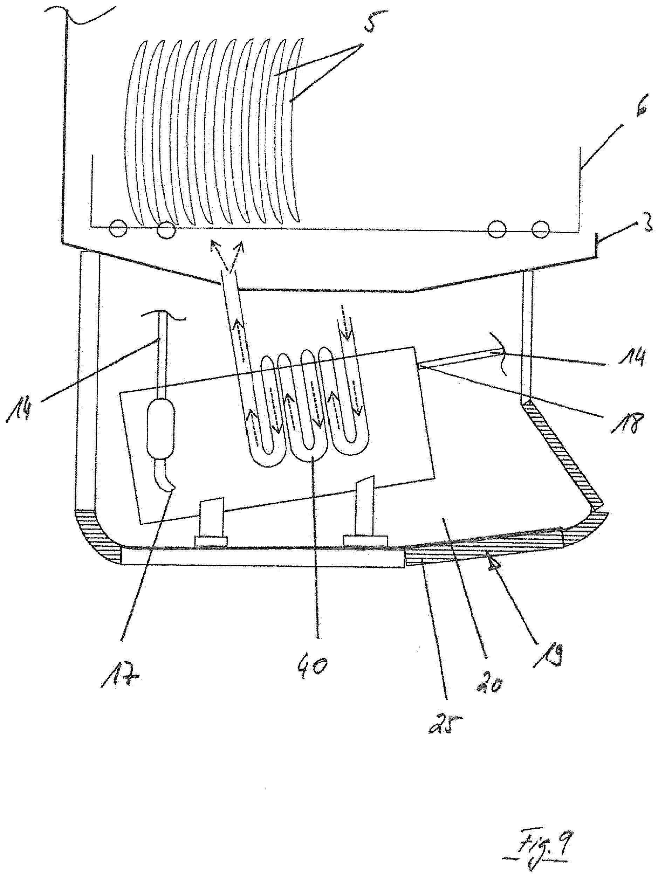

Die Figuren 9 bis 14 zeigen jeweils weitere Ausführungsformen der erfindungsgemäßen Ausgestaltung, wobei der besseren Übersicht wegen in diesen Figuren die erfindungsgemäß vorgesehene Gebläseeinrichtung 21 nicht immer dargestellt ist.

Wie die Ausführungsform nach Fig. 9 erkennen lässt, verfügt die Geschirrspülmaschine 1 über einen dem Verdichter 10 zugeordneten Wärmetauscher 40. Dieser Wärmetauscher 40 steht mit dem Spülraum 4 in strömungstechnischer Verbindung. Im bestimmungsgemäßen Verwendungsfall kann durch den Wärmetauscher 40 aus dem Spülbehälter 3 stammende Spülflotte am Verdichter 10 vorbeigeführt werden, was durch die in Fig. 9 eingezeichneten Pfeile symbolisiert ist. Infolge eines solchen Vorbeiführens der Spülflotte am Verdichter 10 erfolgt ein Aufheizen der durch den Wärmetauscher 40 hindurchgeführten Spülflotte durch die vom Verdichter 10 im bestimmungsgemäßen Betriebsfall ausgehende Abwärme.

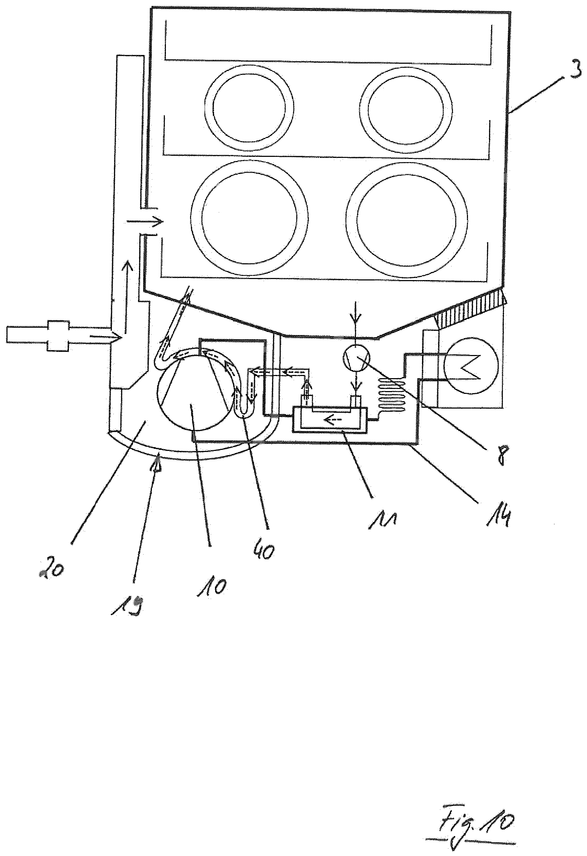

Gemäß dem gezeigten Ausführungsbeispiel nach Fig. 9 ist der Wärmetauscher 40 als Rohrleitung ausgebildet, die an den Spülraum 4 des Spülbehälters 3 strömungstechnisch angeschlossen ist. Dabei ist die Rohrleitung 40 abschnittsweise außenseitig des Verdichters 10 am Verdichter 10 angeordnet. Um einen möglichst optimierten Wärmeübergang vom Verdichter 10 auf die durch die Rohrleitung 40 hindurchgeführte Spülflotte zu erreichen, weist die Rohrleitung 40 zumindest abschnittsweise Windungen auf, die, wie dies insbesondere die Darstellung nach Fig. 10 erkennen lässt, sich zumindest abschnittsweise über den Außenumfang des Verdichters 10 erstrecken.

Die Rohrleitung 40 ist, wie dies ebenfalls Fig. 10 erkennen lässt, bevorzugterweise als Teil des Umwälzkreislaufes 15 ausgebildet. Die Rohrleitung 40 ist mithin an die Umwälzpumpe 8 strömungstechnisch angeschlossen und wird über diese mit Spülflotte versorgt. Wie ein Vergleich der Darstellung nach Fig. 10 mit dem Stand der Technik nach Fig. 15 erkennen lässt, mündet gemäß dem Stand der Technik die Rohrleitung des Umwälzkreislaufes 15 nach einem Passieren des Verflüssigers 11 direkt in den Spülbehälter 3 ein. Erfindungsgemäß ist nun vorgesehen, diese Rohrleitung nicht direkt in den Spülbehälter 3 einmünden zu lassen, sondern diese vielmehr als Rohrleitung 40 in schon vorbeschriebener Weise am Verdichter 10 vorbeizuführen. Damit erfolgt bei der erfindungsgemäßen Ausgestaltung nicht nur ein Wärmeübergang auf die im Umwälzkreislauf 15 geführte Spülflotte im Verflüssiger 11, sondern auch in dem als Wärmetauscher 40 dienenden Rohrabschnitt 40, der außenseitig am Verdichter 10 anliegt. Damit wird auch die vom Verdichter 10 ausgehende Abwärme genutzt, um die im Umwälzkreislauf 15 umgewälzte Spülflotte zu erwärmen. Der Wirkungsgrad der Wärmepumpeneinrichtung 9 wird damit in vorteilhafter Weise erhöht.

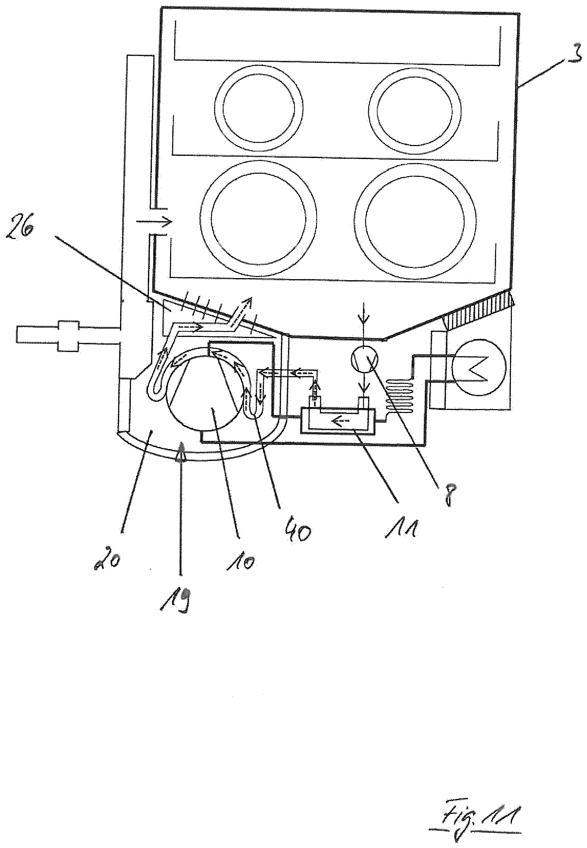

Gemäß einer weiteren Ausführungsform der Erfindung, die in Fig. 11 gezeigt ist, ist ein Latentwärmespeicher 26 vorgesehen, der mit dem Wärmetauscher 40 in Wirkverbindung steht. Dabei ist gemäß der in Fig. 11 gezeigten Ausführungsform vorgesehen, dass der Latentwärmespeicher 26 unter Zwischenordnung eines Wärmetauschers unterseitig des Spülbehälters 3 am Spülbehälter 3 angeordnet ist. Die den Wärmetauscher 40 bildende Rohrleitung 40 ist durch den Latentwärmespeicher 26 geführt und mündet in schon vorbeschriebener Weise in den Spülbehälter 3 ein.

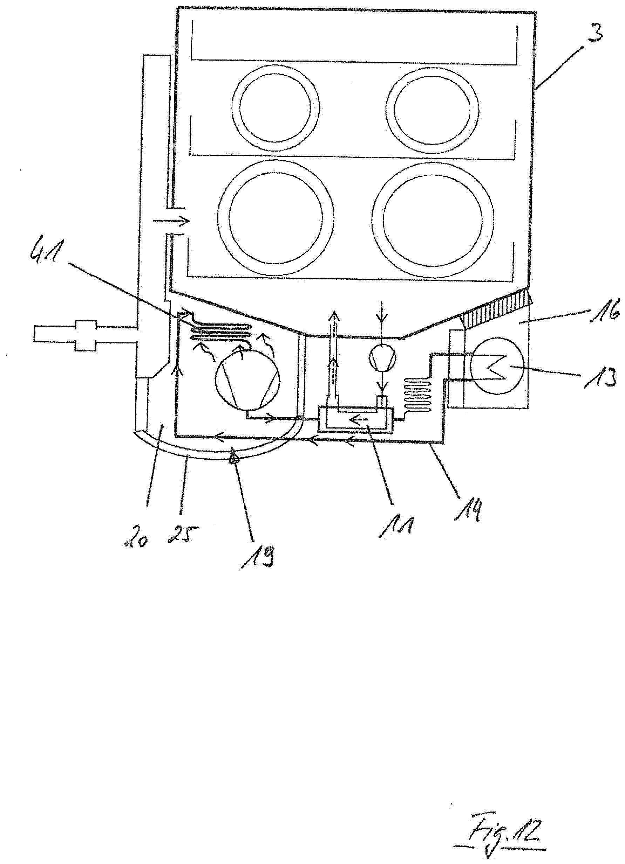

Gemäß der Ausführungsform nach Fig. 12 ist ein Wärmetauscher 41 vorgesehen, der dem Verdichter 10 kältemittelseitig vorgeschaltet ist. Dabei ist der Wärmetauscher 41 eine vom Kältemittel durchströmte Rohrleitung, die zur Vergrößerung der Wärmeübertragungsfläche abschnittsweise Windungen aufweist. Diese Windungen bilden den eigentlichen Wärmetauscher 41 aus, auch Überhitzer genannt. In Durchströmungsrichtung des Kältemittels durch den Strömungskreislauf 14 hindurch ist der Wärmetauscher 41 dem Verdichter 10 strömungstechnisch vorgeschaltet, das heißt er ist im Verdichter 10 kältemitteleingangsseitig zugeordnet, so dass mittels des Wärmetauschers 41 eine Erwärmung des Kältemittels stattfindet bevor dieses in den Verdichter 10 einströmt.

Der Wärmetauscher 41 ist als Luftwärmetauscher ausgebildet, wobei das durch den Wärmetauscher 41 in bestimmungsgemäßem Verwendungsfall hindurchgeführte Kältemittel mittels der den Wärmetauscher 41 umgebenden Luft erwärmt wird, wobei diese im Gehäuse 19 befindliche Luft infolge der vom Verdichter 10 abgegebenen Abwärme aufgeheizt ist. Insofern wird die Verdichterabwärme mittels des Wärmetauschers 41 auf das Kältemittel übertragen, wodurch der Verdichter 10 indirekt gekühlt wird. Dabei erfolgt der Wärmeübergang nahezu verlustfrei, wenn das Gehäuse 19 nach außen mittels einer entsprechenden Wärmedämmung 25 wärmeisoliert ausgebildet ist. Wie die Ausführungsform nach Fig. 12 ferner erkennen lässt, ist der als Überhitzer dienende Wärmetauscher 41 bevorzugterweise so angeordnet, dass sich eine freie Konvektion aufgrund von Temperaturunterschieden der vom Gehäuse 19 bereitgestellten Luft einstellt.

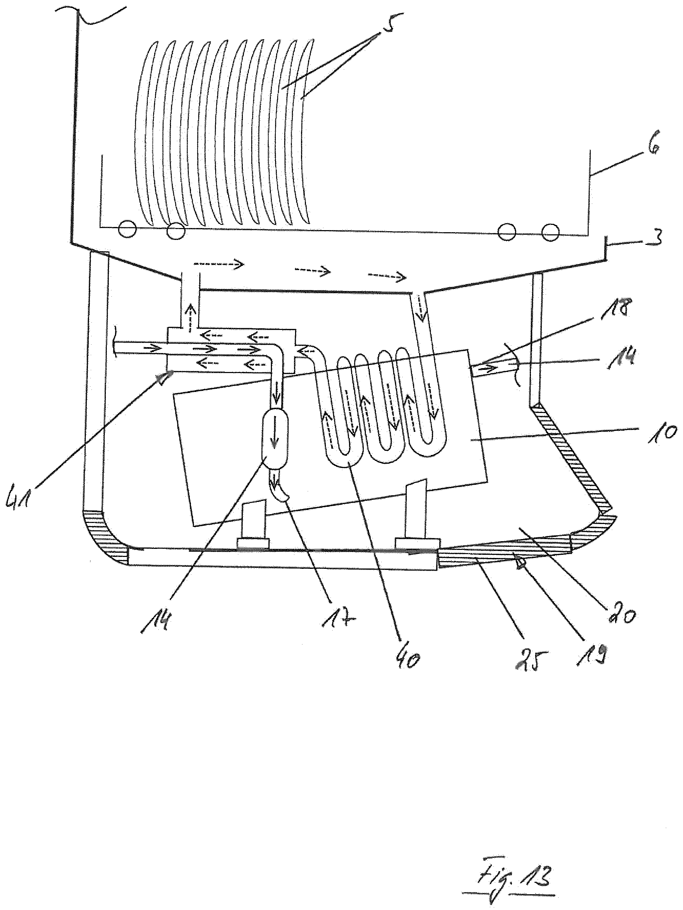

Eine alternative Ausführungsform ist in schematischer Seitenansicht in Fig. 13 gezeigt. Gemäß dieser Ausführungsform ist eine als Wärmetauscher 40 dienende Rohrleitung 40 vorgesehen, die strömungstechnisch an den Spülbehälter 3 angeschlossen ist, wie vorstehend bereits beschrieben. Im bestimmungsgemäßen Verwendungsfall wird durch die Rohrleitung 40 in Entsprechung der in Fig. 13 eingezeichneten Pfeile Spülflüssigkeit, das heißt Spülflotte geführt.

Wie Fig. 13 entnommen werden kann, ist die Rohrleitung 40 zumindest abschnittsweise außenseitig am Verdichter 10 angeordnet. Dabei weist die Rohrleitung 40 zur Bereitstellung einer möglichst großen Wärmeübertragungsfläche zwischen Rohrleitung 40 und Verdichter 10 eine Mehrzahl von Windungen auf.

Im bestimmungsgemäßen Verwendungsfall dient der Wärmetauscher 40 dazu, durch ihn hindurchgeführte Spülflotte durch vom Verdichter 10 abgegebene Abwärme zu erwärmen.

Das im Strömungskreislauf 14 zirkulierende Kältemittel wird in dem dem Verdichter 10 strömungstechnisch vorgeschalteten Wärmetauscher 41 erwärmt. Dabei handelt es sich bei diesem Wärmetaucher 41 um einen Flüssigkeit-Flüssigkeit-Wärmetauscher. Dieser ist dadurch gebildet, dass der Strömungskreislauf 14 zumindest abschnittsweise durch das Rohr 40 hindurchgeführt ist, zu welchem Zweck das Rohr 40 zumindest abschnittsweise einen größer dimensionierten Außendurchmesser aufweist. Wie die Fig. 13 erkennen lässt, durchströmen den Wärmetauscher 41 in Gegenstrom das Kältemittel einerseits und die Spülflotte andererseits. Dabei übertragt die zuvor am Verdichter 10 aufgewärmte Spülflotte Wärmeenergie auf das im Strömungskreislauf 14 geführte Kältemittel.

Gemäß der Ausführungsform nach Fig. 13 wird der Verdichter 10 indirekt über das kalte angesaugte Kältemittel gekühlt, in dem der Fluid-Wärmetauscher 21 verwendet wird, durch den die Saugleitung des Strömungskreislaufes 14 geführt ist und durch welche das kalte angesaugte Kältemittel geleitet wird. Bei dieser Lösung wird die Spülflotte, welche durch den weiteren Wärmetauscher 40 zirkuliert und Wärme vom Verdichter 10 aufnimmt, im Wärmetauscher 41, das heißt dem Überhitzer wieder auf seine Ausgangstemperatur heruntergekühlt. Der Verdichter 10 wird bei dieser Lösung indirekt gekühlt und gleichzeitig das Kältemittel gezielt überhitzt. Eine ausreichende Überhitzung ist notwendig, um sicherzustellen, dass kein flüssiges Kältemittel durch den Verdichter 10 angesaugt wird, was zu erhöhtem Verschleiß oder Totalausfall des Verdichters führen könnte.

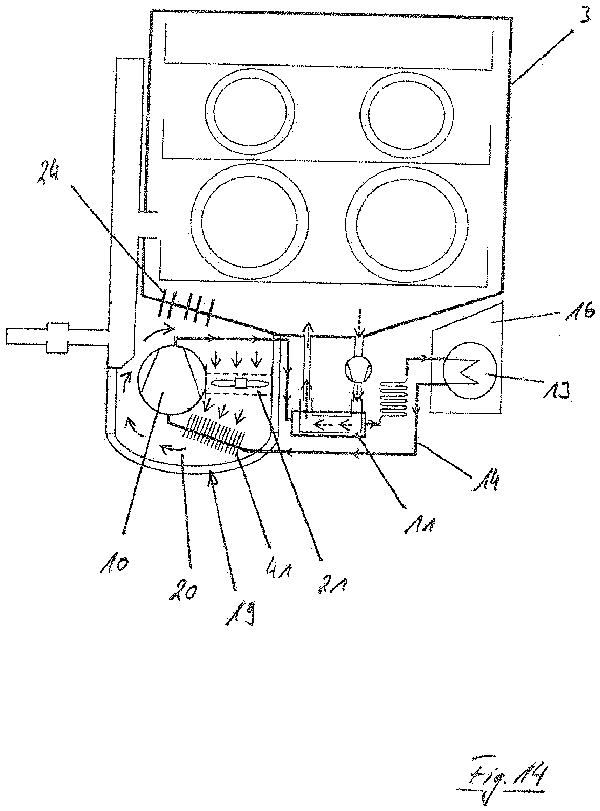

Eine weitere Ausführungsform der erfindungsgemäßen Ausgestaltung ist in Fig. 14 gezeigt. Die von der Abwärme des Verdichters 10 erwärmte und von der Gebläseeinrichtung 21 im Gehäuse 19 umgewälzten warmen Luft dient dazu, einerseits das im Strömungskreislauf 14 geführte Kältemittel als auch die im Spülbehälter 3 befindliche Spülflotte aufzuwärmen. Es ist zu diesem Zweck ein Wärmetauscher 24 vorgesehen, der für eine Wärmeübertragung aus der im Gehäuse 19 befindlichen warmen Luft auf die vom Spülbehälter 3 beherbergte Spülflotte dient. Der Wärmeübertrager 41, das heißt der Überhitzer dient indes dazu, Wärmeenergie aus der umgewälzten heißen Luft aus dem Strömungskreislauf 14 geführte Kältemittel zu übertragen.

Die Ausführungsform nach Fig. 14 erweist sich gegenüber der Ausführungsform nach Fig. 12 als effektiver, weil nicht nur eine Aufheizung des Kältemittels, sondern parallel hierzu auch eine Aufheizung der Spülflotte stattfindet.

### Bezugszeichen

- 1: Geschirrspülmaschine
- 2: Gehäuse
- 3: Spülbehälter
- 4: Spülraum
- 5: Spülgut
- 6: Spülkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf
- 15: Umwälzkreislauf
- 16: Tank
- 17: Kältemitteleingang
- 18: Kältemittelausgang
- 19: Gehäuse
- 20: Luftzirkulationsraum
- 21: Gebläseeinrichtung
- 22: Frischwassereinlaufsystem
- 23: Wärmetauscher
- 24: Wärmetauscher
- 25: Wärmeisolierung
- 26: Latentwärmespeicher
- 27: Wärmetauscher
- 28: Wärmetauscher
- 29: Wärmetauscher
- 30: Wärmetauscher
- 31: Rohrleitung
- 32: Wärmetauscher
- 33: Wärmetauscher
- 34: Einlassöffnung
- 35: Auslassöffnung
- 36: Spritzschutz
- 37: Kanal
- 38: Luftleitblech
- 39: Luftleitblech
- 40: Wärmetauscher (Rohrleitung)
- 41: Wärmetauscher (Überhitzer)

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (5) dient, und einer Wärmepumpeneinrichtung (9), die einen innerhalb eines Gehäuses (19) angeordneten Verdichter (10) mit einem Kältemitteleingang (17) und einem Kältemittelausgang (18) aufweist, sowie mit einer Gebläseeinrichtung (21) und einem Frischwassereinlaufsystem (22),
**dadurch gekennzeichnet,**
**dass** das Gehäuse (19) einen Luftzirkulationsraum (20) bereitstellt, dem die
Gebläseeinrichtung (21) zugeordnet ist, welche dazu eingerichtet ist für eine Luftzirkulation innerhalb des Gehäuses (19) zu sorgen, so dass die Luft um den Verdichter (10) herum zirkulieren kann,
und
- **dass** zwischen Gehäuse (19) und Spülbehälter (3) und/oder zwischen Gehäuse (19) und Frischwassereinlaufsystem (22) ein Wärmetauscher (23, 24) ausgebildet ist,
oder
- **dass** innerhalb des Gehäuses (19) ein Latentwärmespeicher (26) angeordnet ist, der mit dem Spülbehälter (3) und/oder dem Frischwassereinlaufsystem (22) in Wirkverbindung steht,
oder
- **dass** der Verdichter mit einem Wärmetauscher (40) wirkgekoppelt ist, welcher als eine strömungstechnisch an den Spülraum (4) angeschlossene Rohrleitung (40) ausgebildet ist, die abschnittsweise außenseitig des Verdichters (10) am Verdichter (10) angeordnet ist,
wobei direkt mittels des Wärmetauschers (22, 23, 40) bzw. indirekt durch den Latentwärmespeicher (26) ein Wärmeübertrag von der durch die Abwärme des Verdichters (10) erwärmten Luft auf eine im Spülbehälter (3) befindliche Spülflotte bzw. auf ein im Frischwassereinlaufsystem geführtes Frischwasser erfolgen kann.

2. Geschirrspülmaschine nach Anspruch 1, **dadurch gekennzeichnet, dass** die Gebläseeinrichtung (21) innerhalb des Gehäuses (19) angeordnet ist.

3. Geschirrspülmaschine nach Anspruch 1 oder 2, **dadurch gekennzeichnet, dass** das Gehäuse (19) benachbart zum Spülbehälter (3) und/oder zu dem Frischwassereinlaufsystem (22) ausgebildet ist.

4. Geschirrspülmaschine nach einem der vorhergehenden Ansprüche, **dadurch gekennzeichnet, dass** das Gehäuse (19) eine Gehäusewandung aufweist, die abschnittsweise vom Spülbehälter (3) und/oder vom Frischwassereinlaufsystem (22) bereitgestellt ist.

5. Geschirrspülmaschine nach dem Anspruch 4, **dadurch gekennzeichnet, dass** die Gehäusewandung abschnittsweise wärmeisoliert ausgebildet ist.

6. Geschirrspülmaschine nach einem der vorhergehenden Ansprüche, **dadurch gekennzeichnet, dass** innerhalb des Gehäuses (19) ein Luftleitblech (38, 39) angeordnet ist.

7. Geschirrspülmaschine nach einem der vorhergehenden Ansprüche, **dadurch gekennzeichnet, dass** durch das Gehäuse (19) eine strömungstechnisch an den Spülraum (4) angeschlossene Rohrleitung (31) geführt ist.

8. Geschirrspülmaschine nach einem der vorhergehenden Ansprüche, **dadurch gekennzeichnet, dass** der Wärmetauscher (40) welcher als eine strömungstechnisch an den Spülraum (4) angeschlossene Rohrleitung (40) ausgebildet ist, in weiterer Wirkverbindung mit dem 25 Latentwärmespeicher (26) steht.

9. Geschirrspülmaschine nach einem der vorhergehenden Ansprüche, **dadurch gekennzeichnet, dass** der Latentwärmespeicher (26) außenseitig am Spülbehälter (4) und/oder am Frischwassereinlaufsystem (22) angeordnet ist.

10. Geschirrspülmaschine nach einem der vorhergehenden Ansprüche, **dadurch gekennzeichnet, dass** dem Verdichter (10) kältemitteleingangsseitig ein Wärmetauscher (41) als Überhitzer (41) vorgeschaltet ist, wobei der Verdichter (10) und der Überhitzer (41) innerhalb des Gehäuses (19) angeordnet sind.

## Claims

1. Dishwasher, in particular a domestic dishwasher, comprising a washing container (3), which provides a washing chamber (4) and is used for receiving washware (5) to be cleaned, and comprising a heat pump device (9), which has a compressor (10) that is arranged inside a housing (19) and has a refrigerant inlet (17) and a refrigerant outlet (18), and comprising a fan device (21) and a fresh-water inlet system (22),
**characterised in that**
the housing (19) provides an air circulation space (20) to which the fan device (21) is assigned, which fan device is set up to ensure air circulation inside the housing (19) so that the air can circulate around the compressor (10),
and
- that a heat exchanger (23, 24) is formed between the housing (19) and the washing container (3) and/or between the housing (19) and the fresh-water inlet system (22), or
- that a latent heat accumulator (26) is arranged inside the housing (19) and is operatively connected to the washing container (3) and/or the fresh-water inlet system (22), or
- that the compressor is operatively coupled to a heat exchanger (40), which is designed as a pipeline (40) that is fluidically connected to the washing chamber (4) and is arranged in part on the compressor (10) on the outside of the compressor (10),
it being possible for heat to be transferred directly by means of the heat exchanger (22, 23, 40) or indirectly by the latent heat accumulator (26) from the air heated by the waste heat from the compressor (10) to a washing solution in the washing container (3) or to fresh water guided in the fresh-water inlet system.

2. Dishwasher according to claim 1, **characterised in that** the fan device (21) is arranged inside the housing (19).

3. Dishwasher according to either claim 1 or claim 2, **characterised in that** the housing (19) is adjacent to the washing container (3) and/or to the fresh-water inlet system (22).

4. Dishwasher according to any of the preceding claims, **characterised in that** the housing (19) has a housing wall which is provided in part by the washing container (3) and/or by the fresh-water inlet system (22).

5. Dishwasher according to claim 4, **characterised in that** the housing wall is designed to be thermally insulated in part.

6. Dishwasher according to any of the preceding claims, **characterised in that** an air baffle (38, 39) is arranged inside the housing (19).

7. Dishwasher according to any of the preceding claims, **characterised in that** a pipeline (31), which is fluidically connected to the washing chamber (4), is guided through the housing (19).

8. Dishwasher according to any of the preceding claims, **characterised in that** the heat exchanger (40), which is designed as a pipeline (40) fluidically connected to the washing chamber (4), is also operatively connected to the latent heat accumulator (26).

9. Dishwasher according to any of the preceding claims, **characterised in that** the latent heat accumulator (26) is arranged on the outside of the washing container (4) and/or on the fresh-water inlet system (22).

10. Dishwasher according to any of the preceding claims, **characterised in that** a heat exchanger (41) in the form of a superheater (41) is connected upstream of the compressor (10) on the refrigerant inlet side, the compressor (10) and the superheater (41) being arranged inside the housing (19).

## Revendications

1. Lave-vaisselle, en particulier lave-vaisselle ménager, comportant un compartiment de lavage (3) fournissant un espace de lavage (4) et servant à recevoir des articles (5) à nettoyer, et un dispositif de pompe à chaleur (9) qui présente un compresseur (10) disposé à l'intérieur d'un boîtier (19) et comportant une entrée de réfrigérant (17) et une sortie de réfrigérant (18), et comportant un dispositif de ventilation (21) et un système d'arrivée d'eau douce (22),
**caractérisé en ce**
**que** le boîtier (19) fournit un espace de circulation d'air (20) auquel est affecté le dispositif de ventilation (21) et conçu pour assurer une circulation d'air à l'intérieur du boîtier (19), de sorte que l'air peut circuler autour du compresseur (10),
et
- **qu'**un échangeur de chaleur (23, 24) est formé entre le boîtier (19) et le compartiment de lavage (3) et/ou entre le boîtier (19) et le système d'arrivée d'eau douce (22),
ou
- **qu'**un accumulateur de chaleur latente (26) est disposé à l'intérieur du boîtier (19) et est en liaison fonctionnelle avec le compartiment de lavage (3) et/ou le système d'arrivée d'eau douce (22),
ou
- **que** le compresseur est couplé de manière fonctionnelle à un échangeur de chaleur (40) qui est formé comme une conduite tubulaire (40) raccordée par liaison fluidique à l'espace de lavage (4) et disposée dans certaines régions sur le compresseur (10) à l'extérieur du compresseur (10),
un transfert de chaleur de l'air chauffé par la chaleur résiduelle du compresseur (10) à une liqueur de lavage se trouvant dans le compartiment de lavage (3) ou à de l'eau douce guidée dans le système d'arrivée d'eau douce pouvant s'effectuer directement au moyen de l'échangeur de chaleur (22, 23, 40) ou indirectement par l'accumulateur de chaleur latente (26).

2. Lave-vaisselle selon la revendication 1, **caractérisé en ce que** le dispositif de ventilation (21) est disposé à l'intérieur du boîtier (19).

3. Lave-vaisselle selon la revendication 1 ou 2, **caractérisé en ce que** le boîtier (19) est formé à côté du compartiment de lavage (3) et/ou du système d'arrivée d'eau douce (22).

4. Lave-vaisselle selon l'une des revendications précédentes, **caractérisé en ce que** le boîtier (19) présente une paroi de boîtier qui est fournie dans certaines régions par le compartiment de lavage (3) et/ou par le système d'arrivée d'eau douce (22).

5. Lave-vaisselle selon la revendication 4, **caractérisé en ce que** la paroi de boîtier est formée de manière à être isolée thermiquement dans certaines régions.

6. Lave-vaisselle selon l'une des revendications précédentes, **caractérisé en ce qu'**un déflecteur d'air (38, 39) est disposé à l'intérieur du boîtier (19).

7. Lave-vaisselle selon l'une des revendications précédentes, **caractérisé en ce qu'**une conduite tubulaire (31) raccordée par liaison fluidique à l'espace de lavage (4) est guidée à travers le boîtier (19).

8. Lave-vaisselle selon l'une des revendications précédentes, **caractérisé en ce que** l'échangeur de chaleur (40), lequel est formé en tant que conduite tubulaire (40) raccordée par liaison fluidique à l'espace de lavage (4), est en outre en liaison fonctionnelle avec l'accumulateur de chaleur latente (26).

9. Lave-vaisselle selon l'une des revendications précédentes, **caractérisé en ce que** l'accumulateur de chaleur latente (26) est disposé à l'extérieur du compartiment de lavage (4) et/ou du système d'arrivée d'eau douce (22).

10. Lave-vaisselle selon l'une des revendications précédentes, **caractérisé en ce qu'**un échangeur de chaleur (41) est monté en amont du compresseur (10) côté entrée de réfrigérant en tant que surchauffeur (41), le compresseur (10) et le surchauffeur (41) étant disposés à l'intérieur du boîtier (19).
